# EUROPEAN PATENT APPLICATION

(11) **EP 0 840 138 A1**
(43) Date of publication of application: **06.05.1998**
(21) Application number: 97304105.6
(22) Date of filing: 12.06.1997
(51) Int. Cl.: G01S 5/14

(54) **Navigation apparatus informing of peripheral situation of vehicle and method for controlling the same**

(30) Priority: 04.11.1996 KR 9651906
(71) Applicant: Samsung Electronics Co., Ltd., Suwon City, Kyungki-do (KR)
(72) Inventor: Seo, Chang-Kyu, Suwon-city, Kyungki-do (KR)
(74) Representative: Chugg, David John

(57) **Abstract**

A navigation apparatus for vehicles capable of sensing the peripheral situation of a vehicle, thereby automatically displaying the sensed peripheral situation while generating an alarm when the peripheral situation is determined as a hazardous situation. The invention also provides a method for controlling the navigation apparatus. This navigation apparatus includes a current-position computing unit (112) for computing a pseudo current position of the vehicle, based on information from a speed sensor (111) and information from a gyro sensor (111), and pseudo coordinates of the current vehicle position provided by artificial satellites, a peripheral situation sensing unit (117) for sensing a peripheral situation of the vehicle, a peripheral image sensing unit (118) for picking up images of peripheral objects existing in the vicinity of the vehicle, an alarm unit (120) for generating a sound signal informing of a hazard in response to an alarm control signal, a display unit (115) for receiving display data and displaying the received display data on a screen, and a system control unit (116) for computing coordinates of the current vehicle position and coordinates of the position of each peripheral object, based on the computed pseudo current vehicle position and the information from the peripheral situation sensing unit (117), and sending display data to the display unit (115).

## Description

The present invention relates to a navigation apparatus, and more particularly to a navigation apparatus for vehicles capable of sensing the peripheral situation of a vehicle, thereby automatically displaying the sensed peripheral situation on a monitor while generating an alarm when the peripheral situation is determined as a hazardous situation. The present invention also relates to a method for controlling such a navigation apparatus.

By virtue of developments of the electronic industry, a navigation apparatus has been incorporated in a moving object such as a vessel, an airplane or a vehicle. The moving object obtains information from the navigation apparatus to its current position so that it can more rapidly reach its destination. Such a navigation apparatus incorporated in a moving object has been progressed to a GPS (Global position system) positioning apparatus which is adapted to identify the current position and moving speed of a moving object or to determine a movement path of the moving object.

Such a GPS positioning apparatus receives information, indicative of the latitude, longitude and altitude associated with the current position of a moving object, sent from a plurality of artificial satellites included in the GPS, thereby computing the current position of the moving object. After the computation, the GPS positioning apparatus provides map information including the current position of the moving object to the driver of the moving object in the form of a graphic via a monitor. In other words, such a conventional navigation apparatus indicates the current position of the moving object, which is calculated based on the information received from the GPS, on a map displayed on a display screen.

The navigation apparatus also indicates the advancing direction of the moving object, the distance between the current position of the moving object and the destination thereof, the current speed of the moving object, the movement path of the moving object set by the driver prior to the running of the moving object, and an optimum movement path leading from the current position to the destination, etc., thereby providing a variety of information necessary to the running of the moving object to the driver. Navigation apparatus having such function is being progressed in order to provide improved services to users of moving objects.

However, it is difficult for moving objects, in particular, vehicles, to cope with operating environments which have been gradually worsening even when the above-mentioned navigation apparatus is incorporated in those moving objects. For instance, parking spaces are insufficient because road space is limited in spite of an increase in the demand for vehicles and the road situation may grow gradually more complex in accordance with the increased number of vehicles. As vehicles increase in number, the possibility of contact between vehicles also increases. In other words, the probability of accidents increases correspondingly. Such contact accidents occur frequently when it is difficult to recognize the peripheral situation (i.e., the surrounding conditions) as in the case when a vehicle starts to move or is being parked. In particular, it is difficult for drivers to locate persons or other vehicles existing in a vehicle blind spot. For this reason, there is a concern about accidents and hazards to human lives.

In order to attempt to solve the above-mentioned problems, a navigation apparatus has been proposed which is adapted to sense whether or not there is an object approaching a subject vehicle and to show the sensed object to the driver of the vehicle. Such a navigation apparatus is disclosed in Korean Patent Application No. 95-56570 filed on December 26, 1995 in the name of the applicant, SAMSUNG Electronics CO, Ltd.,. However, this pending application has several problems.

In the case of the above-mentioned pending application, the position of an object existing in the vicinity of the vehicle is sensed by an infrared sensor. The distance between the object and the vehicle is also calculated. Based on the results of the sensing and calculating operations, the object is shown on a display unit in the form of a two-dimensional graphic. However, it is very difficult to determine peripheral situations above and beneath the vehicle because the sensed object is shown in the form of a two-dimensional graphic. Since the technique disclosed in the pending application only provides a function of simply showing the peripheral situations of the vehicle, it is difficult to determine the degree of a hazard which may cause contact of the vehicles with peripheral objects. Where the driver frequently rotates the steering wheel in a limited operating space of a vehicle, he may fail to realize the final resting position of the wheels. In this case, it is difficult for the driver to determine a correct steering position of the steering wheel.

An aim of embodiments of the present invention is to provide a navigation apparatus capable of sensing the peripheral situation of a vehicle, in which the navigation apparatus is incorporated, and three-dimensionally displaying the sensed peripheral situation on a monitor.

Another aim of embodiments of the present invention is to provide a method for sensing the peripheral situation of a vehicle by use of a navigation apparatus and three-dimensionally informing the sensed peripheral situation to the driver of the vehicle.

Still another aim of embodiments of the present invention is to provide a navigation apparatus capable of sensing the peripheral situation of a vehicle, in which the navigation apparatus is incorporated, and providing an alarm to the driver of the vehicle when the peripheral situation is determined as a hazardous situation, and to provide a method for controlling the navigation apparatus.

Yet another aim of embodiments of the present invention is to provide a navigation apparatus having a function of sensing the steered position of the front wheels of a vehicle, in which the navigation apparatus is incorporated, and of providing the sensed wheel position as display information to the driver, and to provide a method for controlling the navigation apparatus.

Further another aim of embodiments of the present invention is to provide a navigation apparatus capable of providing the peripheral situation of a vehicle, in which the navigation apparatus is incorporated, and the steered position of the wheels of the vehicle to the driver of the vehicle, thereby preventing accidents.

In accordance with an aspect of the present invention, there is provided a navigation apparatus for a vehicle comprising a current-position computing unit for computing a current position of the vehicle, based on information trained by a speed sensor, information obtained by a gyro sensor and information provided by a global position system, the apparatus comprising further comprising: a plurality of infrared sensors and a plurality of cameras for sensing peripheral objects existing in the vicinity of the vehicle and outputting three-dimensional images of the sensed peripheral objects; an alarm unit for generating a sound signal informing of a hazard in response to an alarm control signal; a display unit for receiving display data and displaying the received display data on a screen; a wheel alignment state sensing unit for sensing a wheel alignment state of the vehicle; and a system control unit for calculating a position of each peripheral object, based on information obtained by the sensing results of the infrared sensors and cameras, sending display data about the image of the sensed peripheral object along with display data about an image of the computed current vehicle position to the display unit, sending the alarm control signal to the alarm unit when a distance between the current vehicle position and the calculated peripheral object position corresponds to a hazardous distance, and sending display data about the sensed wheel alignment state to the display unit in response to a display selecting signal.

The system control unit preferably calculates position values (coordinates) of objects, existing in the vicinity of the vehicle, sensed by a plurality of infrared sensors and a plurality of cameras, based on the computed current vehicle position. The system control unit may perform a control for three-dimensionally displaying the current position of the vehicle and the positions of the peripheral objects by use of the calculated position values of the peripheral objects. When a hazardous situation exists in the vehicle due to an approach of the vehicle to a peripheral object, that is, when the coordinates of the peripheral object approximate to the pseudo coordinates of the current vehicle position within predetermined values, respectively, the system control unit is preferably arranged to send an alarm control signal to the alarm unit in order to inform the driver of the hazardous situation (contact accident). During such operations, the system control unit can send an output from the wheel alignment state sensing unit to the display unit at the request of the driver, thereby displaying the wheel alignment state on the display unit. In accordance with these operations, the driver may identify the current position of the vehicle and the positions of the peripheral objects, for example, other vehicles or persons. The driver may also become aware of a hazardous situation which he/she would otherwise have been ignorant of. It is also possible to identify the wheel alignment state of the vehicle. Accordingly, it is possible to more accurately manipulate the steering wheel of the vehicle in a limited place such as a parking place.

According to an aspect of the invention, there is provided a navigation apparatus incorporated in a vehicle, the apparatus comprising: a current-position computing unit for computing a pseudo current position of said vehicle, based on information about a running speed of said vehicle output from a speed sensor, information about an azimuth angle of said vehicle output from a gyro sensor, and pseudo coordinates of the current vehicle position provided by artificial satellites included in a global position system; a peripheral sensing unit for picking up images of peripheral objects existing in the vicinity of said vehicle and outputting information about the picked-up images; an alarm unit for generating a sound signal informing of a hazard in response to an alarm control signal; a display unit for receiving display data and displaying said received display data on a screen; and a system control unit for computing coordinates of the current vehicle position and coordinates of the position of each peripheral object, based on the pseudo current vehicle position computed by said current-position computing unit and the information about the image of the peripheral object picked up by said peripheral sensing unit, and sending display data about the sensed peripheral object and current vehicle position corresponding to the computed coordinates to said display unit.

Preferably, said system control unit outputs said alarm control signal when the coordinates of the sensed peripheral object approximate to the pseudo coordinates of the current vehicle position within predetermined values, respectively.

Preferably, said peripheral sensing unit comprises a peripheral situation sensing unit comprising a plurality of infrared sensors respectively mounted on the outer surface of said vehicle to sense objects existing in the vicinity of said vehicle.

Said peripheral sensing unit may comprise a peripheral image sensing unit comprising a plurality of video cameras respectively mounted on the outer surface of said vehicle to pick up the images of the peripheral objects.

According to a further aspect of the invention, there is provided a navigation apparatus for a vehicle comprising a current-position computing unit for computing a current position of said vehicle, based on information obtained by a speed sensor, information obtained by a gyro sensor and information provided by a global position system, the apparatus further comprising: a plurality of infrared sensors and a plurality of cameras for sensing peripheral objects existing in the vicinity of said vehicle and outputting three-dimensional images of the sensed peripheral objects; an alarm unit for generating a sound signal informing of a hazard in response to an alarm control signal; a display unit for receiving display data and displaying the received display data on a screen; a wheel alignment state sensing unit for sensing a wheel alignment state of said vehicle; and a system control unit for calculating a position of each peripheral object, based on information obtained by the sensing results of said infrared sensors and cameras, sending display data about the image of the sensed peripheral object along with display data about an image of the computed current vehicle position to said display unit, sending said alarm control signal to said alarm unit when a distance between the current vehicle position and the calculated peripheral object position corresponds to a hazardous distance, and sending display data about the sensed wheel alignment state to said display unit in response to a display selecting signal.

Preferably, said wheel alignment state sensing unit comprises a plurality of cameras or angular-velocity sensors respectively mounted on said vehicle in the vicinity of wheels of said vehicle to sense the steered positions of the wheels.

Said alarm unit may comprise a speaker mounted on said vehicle in the interior of said vehicle to inform of a hazardous situation of said vehicle in response to the receipt of said alarming control signal.

According to another aspect, there is provided a method for controlling a navigation apparatus for a vehicle, the apparatus including a plurality of infrared sensors and a plurality of cameras mounted on the outer surface of said vehicle, a wheel alignment state sensing unit respectively mounted on said vehicle in the vicinity of the wheels of said vehicle and adapted to sense a wheel alignment state of the wheels, an alarm unit for generating a sound signal informing of a hazardous situation in response to an alarm control signal, a current-position computing unit for computing a current position value of said vehicle, based on information obtained by a speed sensor, information obtained by a gyro sensor and information provided by a global position system, and a display unit for receiving display data and displaying the received display data on a screen, the method comprising the steps of: detecting information about positions of objects, which exist in the vicinity of said vehicle, sensed by said infrared sensors, based on the current vehicle position value computed by said current-position computing unit; receiving images of the objects picked up by the cameras and displaying images of said vehicle and objects on said display unit, based on the computed current vehicle position value along with a position value of each object; sending said alarm control signal to said alarm unit when a difference between the computed current vehicle position value and the object position value is equal to or less than a predetermined value; and displaying the sensed wheel alignment state on said display unit in response to an external control signal, based on an output from said wheel alignment state sensing unit.

For a better understanding of the invention, and to show how embodiments of the same may be carried into effect, reference will now be made, by way of example, to the accompanying diagrammatic drawings, in which:
Figure 1 is a block diagram of a navigation apparatus for vehicles in accordance with an embodiment of the present invention;
Figure 2 is a schematic view illustrating the attached states of sensors adapted to sense the wheel alignment state and peripheral situation of a vehicle in accordance with described embodiments;
Figure 3 is a schematic view illustrating a screen on which images of peripheral objects sensed by the navigation apparatus are displayed; and
Figure 4 is a schematic view illustrating the steered state of the vehicle wheels sensed by the navigation apparatus.

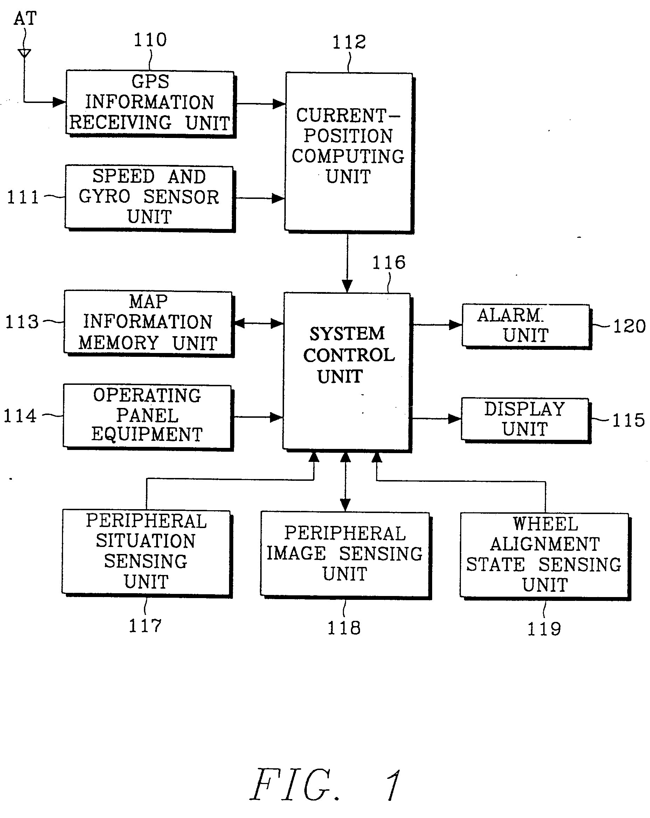

Figure 1 illustrates a block diagram of a navigation apparatus for vehicles in accordance with a preferred embodiment of the present invention.

As shown in Figure 1, the navigation apparatus includes, at least, a GPS information receiving unit 110 adapted to receive electrical waves from a plurality of artificial satellites included in a GPS via an antenna AT and to calculate pseudo coordinates associated with the current position of a vehicle, based on the received electrical waves. The navigation apparatus also includes a speed and gyro sensor unit 111 for detecting the current running speed and azimuth angle of the vehicle. The speed and gyro sensor unit 111 includes a speed sensor and a gyro sensor respectively adapted to sense the running speed and azimuth angle of the vehicle, which is a moving object, thereby outputting information about the sensed running speed and azimuth angle. The output from the GPS information receiving unit 110 and the output from the speed and gyro sensor unit 111 are applied to a current-position computing unit 112.

The current-position computing unit 112 calculates a pseudo current position of the vehicle, based on the running speed and azimuth angle of the vehicle output from the speed and gyro sensor unit 111. The current-position computing unit 112 also selects the calculated pseudo position value or the pseudo position value received from the GPS information receiving unit 110 responsive to the pseudo current-position coordinates received from the GPS information receiving unit 110, and outputs the selected value. The selection of a pseudo position value is based on the magnitude of an error in the speed and azimuth angle output from the speed and gyro sensor unit 111. For example, the calculated value is selected when the accumulative error in information signals output from the speed and gyro sensor unit 111 is small. When the accumulative error is large, it is corrected using the value output from the GPS information receiving unit 110. In addition to the calculation of the current position of the vehicle, the current-position computing unit 112 operating as mentioned above, also calculates information about the running of the vehicle such as information about the speed and advancing direction of the vehicle. The finally calculated information about the running of the vehicle is sent to a system control unit 116.

Referring to Figure 1, a map information memory unit 113 also stores map information and other additional data therein. Under control of the system control unit 116, the map information memory unit 113 accesses to the map information and other additional data and sends the accessed information to the system control unit 116. The navigation apparatus further includes an operating panel equipment (OPE) 114 having a plurality of function keys adapted to effectively operate the navigation apparatus. In accordance with an appropriate key selection using the operating panel equipment 114, an interface is established between the user and the navigation apparatus. A display unit 115 is also coupled to the system control unit 116 to display map information read from the map information memory unit 113 along with various conditions occurring in accordance with operations of the navigation device under control of the system control unit 116.

The system control unit 116 includes a ROM stored with a program for controlling the entire operation of the navigation apparatus, and a RAM for temporarily storing data processed during the operation of the navigation apparatus. The system control unit 116 having such a configuration reads map information about areas in the vicinity of the vehicle, based on information about the running of the vehicle output from the current-position computing unit 112. The system control unit 116 then sends the read map information to the display unit 115 which is, in turn, controlled by the system control unit 116 to display the map information.

In addition to the display of the map information, the system control unit 116 also indicates the advancing direction of the vehicle, the distance between the current position of the vehicle and the destination thereof, the current speed of the vehicle, the movement path of the vehicle set by the driver prior to the running of the vehicle, and an optimum movement path leading to the destination, etc., thereby providing a variety of information necessary to the running of the vehicle to the driver. Such elements performing the above-mentioned functions are also included in conventional navigation apparatus.

In addition to such elements, the navigation apparatus herein described further includes the speed and gyro sensor unit 111, a peripheral situation sensing unit 117, a peripheral image sensing unit 118 and a wheel alignment state sensing unit 119 as its characterized constituting elements. The speed and gyro sensor unit 111 is also a characterized constituting element of the navigation apparatus. By virtue of such characterized elements, the navigation apparatus can always display objects existing in the vicinity of the vehicle, thereby accurately providing the running environment of the vehicle to the driver. In particular, the navigation apparatus of the present invention provides an alarm to the driver when a hazardous situation exists due to an approach of the vehicle to a peripheral object. In addition, this navigation apparatus provides a convenience in sensing the alignment of the wheels during the manipulation of the steering wheel performed when the vehicle is being parked in a limited parking space. Such effects will be apparent from the following description.

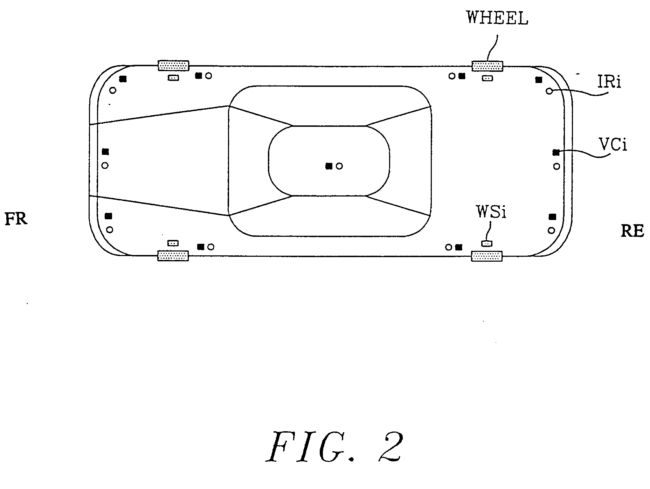

The peripheral situation sensing unit 117 is adapted to sense the peripheral situation of the vehicle. This peripheral situation sensing unit 117 includes a plurality of sensors mounted on the outer surface of a vehicle body and adapted to sense the peripheral situation of the vehicle. An example of such a configuration for the peripheral situation sensing unit 117 is illustrated in Figure 2. Each sensor of the peripheral situation sensing unit 117 may be an infrared sensor which serves to sense the position of an object and the distance between objects.

Referring to Figure 2, a plurality of infrared sensors IRi (i is an integer of 1, 2, 3, ..., or n) are shown which serve to sense the peripheral situation of the vehicle. The infrared sensors IRi are mounted on the outer surface of the vehicle while being uniformly spaced from one another. The peripheral situation sensing unit 117, which includes a plurality of infrared sensors IRi, periodically emits infrared rays in forward, rearward, left and right directions under control of the system control unit 116. The peripheral situation sensing unit 117 detects whether or not there is a reflected infrared ray, thereby detecting whether or not an object exists in the vicinity of the vehicle. When the peripheral situation sensing unit 117 detects an object existing in the vicinity of the vehicle, it sends a position detecting signal to the system control unit 116. For instance, where the infrared sensor IRi positioned on the right side portion of the vehicle detects an object existing in the vicinity of the vehicle, it outputs a signal indicative of the existence of the object to the right of the vehicle. Based on the output from the peripheral situation sensing unit 117, the system control unit 116 detects the distance between the vehicle and the object by computing the time taken to receive an infrared ray reflected from the object after transmitting the infrared ray to the object. Thus, the system control unit 116 recognizes the position of the object. Such infrared sensors may be mounted on the roof of the vehicle to sense an object existing above the vehicle.

The peripheral image sensing unit 118 is adapted to obtain image information about the peripheral situation of the vehicle. The peripheral image sensing unit 118 includes a plurality of image sensors. Preferably, the image sensors correspond in number to the infrared sensors IRi. For such image sensors, video cameras VCi shown in Figure 2 may be used. The video cameras VCi are controlled by the system control unit 116. Images of objects picked up by the video cameras VCi are applied to the system control unit 116.

For instance, where an object existing to the left of the vehicle is sensed by the peripheral situation sensing unit 117, the video cameras VCi (three video cameras in the illustrated case) attached on the left side portion of the vehicle generate video signals indicative of picked-up images, respectively. The system control unit 116 processes the video signals received from the video cameras VCi, thereby outputting a video signal indicative of a three-dimensional image of the object. The video signal from the system control unit 116 is applied to the display unit 115 which, in turn, three-dimensionally displays the image of the object existing to the left of the vehicle.

The wheel alignment state sensing unit 119 as shown in Figure 2 includes wheel alignment state sensors WSi respectively adapted to sense the positions of the wheels of the vehicle, in particular, the front wheels steered in accordance with the steering operation of the steering wheel included in the vehicle. Each wheel alignment state sensor WSi detects the steered angle of each wheel from the longitudinal axis of the vehicle body, thereby sensing the steered position or direction of the wheel. For such wheel alignment state sensors, cameras or angular-velocity sensors may be employed. The wheel alignment state sensing unit 119 generates a wheel alignment state sensing signal in accordance with its sensing operation and sends the wheel alignment state sensing signal to the system control unit 116. When the user or the driver requests to display the sensed wheel alignment state, the system control unit 116 sends the wheel alignment state sensing signal to the display unit 115 which, in turn, displays the sensed wheel alignment state.

An alarm unit 120 is coupled to an output port of the system control unit 116 to provide an alarm informing of a hazardous situation to the driver in response to an alarm control signal from the system control unit 116. The alarming unit 120 includes a speaker.

Figure 2 shows the attached states of the sensors adapted to sense the wheel alignment state and peripheral situation of the vehicle. In Figure 2, the reference character "FR" denotes the front surface of the vehicle whereas the reference character "RE" denotes the rear surface of the vehicle. Referring to Figure 2, it can be found that a plurality of infrared sensors IRi are attached to the outer surface of the vehicle to best sense objects existing in the vicinity of the vehicle. A plurality of image sensors VCi are also mounted on the outer surface of the vehicle at positions respectively near to the infrared sensors IRi to obtain images of the peripheral objects. A plurality of wheel alignment state sensors WSi are also provided in the vicinity of front and rear wheels, respectively, to sense the steered states of the front and rear wheels with respect to the vehicle body.

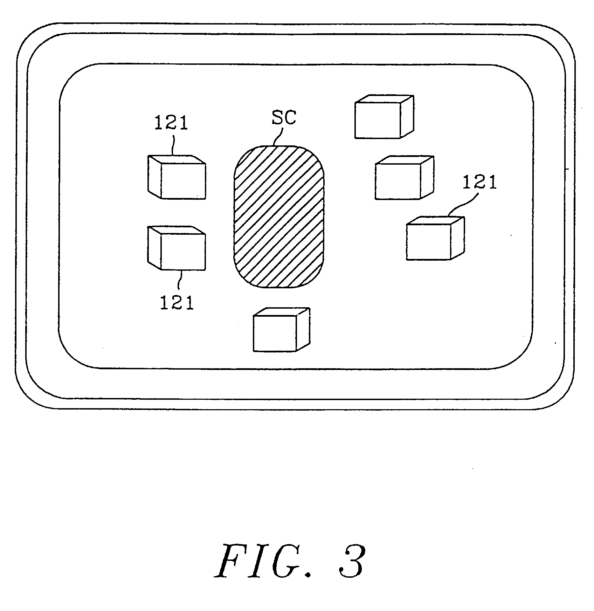

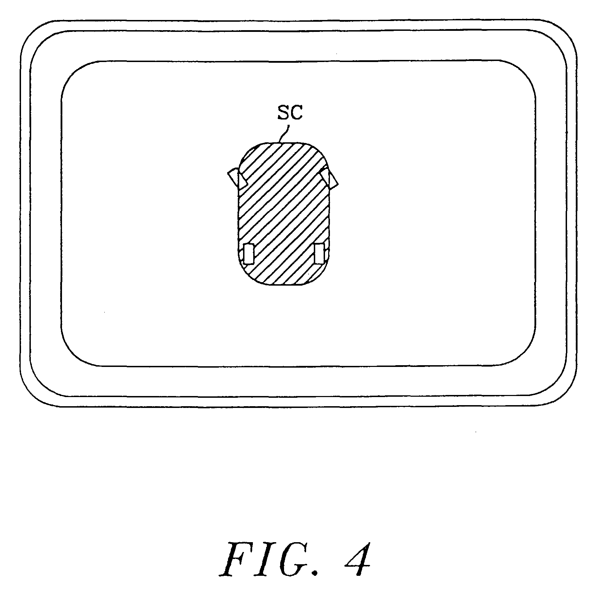

Figure 3 is a schematic view illustrating a screen on which images of peripheral objects sensed by the navigation apparatus are displayed. Figure 4 is a schematic view illustrating the steered state of the vehicle wheels sensed by the navigation apparatus of the present invention. In FIGS. 3 and 4, the reference character "SC" denotes the vehicle in which the navigation apparatus is incorporated. The reference numeral 121 denotes three-dimensional images of peripheral objects sensed by the peripheral situation sensors.

Now, the operation of the navigation apparatus having the above-mentioned configuration will be described. In the following description, it is assumed that a plurality of objects, for example, vehicles or persons, exist in the vicinity of a vehicle in which the navigation apparatus of Figure 1 is incorporated.

When the user or the driver selects a peripheral object sensing key of the operating panel equipment 114, the system control unit 116 controls the peripheral situation sensing unit 117 in response to a peripheral object sensing key signal from the operating panel equipment 114, thereby causing the infrared sensors of Figure 2 to operate. In accordance with the operation of the infrared sensors, the peripheral situation sensing unit 117 sends, to the system control unit 116, a signal indicative of the result of sensing objects existing in the vicinity of the vehicle. Based on the signal received from the peripheral situation sensing unit 117, the system control unit 116 determines the distance between the vehicle and each object associated with the received signal.

The system control unit 116, which realizes each object existing in the vicinity of the vehicle, then identifies the position of the object, based on the pseudo current position of the vehicle computed by the current position computing unit 112. Thereafter, the system control unit 116 receives an output from the peripheral image sensing unit 118 to obtain image information about each position-identified object. The system control unit 116 sends the image information to the display unit 115 which, in turn, displays a 3-dimensional representation of the image of each object. At this moment, it should be noted that the image of each object is displayed in such a manner that it is indicated on the image of a map read from the map information memory unit 113 in the vicinity of the image of the vehicle indicative of the current position of the vehicle.

Meantime, when the system control unit 116 determines that the distance between the vehicle and a sensed peripheral object is equal to or smaller than a predetermined distance, that is, it determines that there is a hazard which may cause contact of the vehicle with peripheral objects, it sends an alarm control signal to the alarm unit 120. In response to the alarm control signal, the alarm unit 120 generates an alarm through a speaker, thereby informing the driver of a hazardous situation. The alarm may be a voice sound generated by reproducing a previously stored voice message or a simple buzzer sound.

Accordingly, the driver can safely drive the vehicle while only watching the screen of the display unit 115 without looking at the conditions of the surrounding vicinity. In particular, it is possible to prevent contact accidents because the navigation apparatus automatically provides an alarm to the driver when the vehicle approaches an object.

Also, the navigation apparatus having the configuration of Figure 1 has functions of sensing the wheel alignment state of the vehicle and of displaying the sensed wheel alignment state on the screen of the display unit 115. The driver can select a wheel alignment state sensing key provided at the operating panel equipment 114 to more accurately manipulate the steering wheel of his vehicle in a limited place such as a parking place where other vehicles are parked to the front, rear, left or right of his vehicle. In this case, the system control unit 116 senses the current wheel alignment state from the wheel alignment state sensing unit 119 in response to the selection of the wheel alignment state sensing key.

Subsequently, the system control unit 116 produces an image indicative of the sensed wheel alignment state and then controls the display unit 115 to display the sensed wheel alignment state on the screen as shown in Figure 4.

Thus, the navigation apparatus herein described can display the vehicle SC and the peripheral objects 121 on the display unit 115, as shown in Figure 3. The navigation apparatus also can display the wheel alignment state of the vehicle SC on the display unit 115, as shown in Figure 4.

The images of the vehicle SC and peripheral objects 121 can be displayed on the display unit 115 at an enlarged or reduced scale. For example, the user may select an image enlarging/reducing key provided at the display unit 115 to enlarge or reduce the scale of the images displayed on the display unit 115 as illustrated in Figure 3 or 4. In this case, the system control unit 116 enlarges or reduces the images of peripheral situations displayed on the display unit 115. In accordance with such an operation, the driver can more accurately see desired portions of the images of his vehicle and peripheral objects or vehicles displayed on the display unit 115, so that he can realize a peripheral situation of a widened range.

As apparent from the above description, the apparatus is capable of not only displaying a vehicle, in which the navigation apparatus is incorporated, along with a peripheral situation of the vehicle, but also informing of a hazardous situation. Accordingly, the driver can realize the peripheral situation while only watching the screen of the display unit without directly looking at the conditions of the surrounding vicinity. In particular, it is possible to prevent contact accidents because the navigation apparatus automatically provides an alarm to the driver when the vehicle approaches an object. In particular, the driver can locate persons or other vehicles existing in a blind spot. Accordingly, it is possible to prevent contact accidents or accidents to human lives even in the case when the vehicle is running or being parked in a limited parking space. In addition, the present invention provides an advantage in that the driver can realize the peripheral situation of the vehicle in a bad operating environment in which it is difficult to realize the surrounding vicinity of the vehicle due to, for example, rainy weather.

Although the preferred embodiments of the invention have been disclosed for illustrative purposes, those skilled in the art will appreciate that various modifications, additions and substitutions are possible, without departing from the scope of the invention as disclosed in the accompanying claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A navigation apparatus incorporated in a vehicle, the apparatus comprising:
a current-position computing unit (112) for computing a pseudo current position of said vehicle, based on information about a running speed of said vehicle output from a speed sensor (111), information about an azimuth angle of said vehicle output from a gyro sensor (111), and pseudo coordinates of the current vehicle position provided by artificial satellites included in a global position system (110);
a peripheral sensing unit (117, 118) for picking up images of peripheral objects existing in the vicinity of said vehicle and outputting information about the picked-up images;
an alarm unit (120) for generating a sound signal informing of a hazard in response to an alarm control signal;
a display unit (115) for receiving display data and displaying said received display data on a screen; and
a system control unit (116) for computing coordinates of the current vehicle position and coordinates of the position of each peripheral object, based on the pseudo current vehicle position computed by said current-position computing unit (112) and the information about the image of the peripheral object picked up by said peripheral sensing unit (117, 118), and sending display data about the sensed peripheral object and current vehicle position corresponding to the computed coordinates to said display unit (115).

2. The navigation apparatus in accordance with claim 1, wherein said system control unit (116) outputs said alarm control signal when the coordinates of the sensed peripheral object approximate to the pseudo coordinates of the current vehicle position within predetermined values, respectively.

3. The navigation apparatus in accordance with claim 1 or 2, wherein said peripheral sensing unit comprises a peripheral situation sensing unit (117) comprising a plurality of infrared sensors respectively mounted on the outer surface of said vehicle to sense objects existing in the vicinity of said vehicle.

4. The navigation apparatus in accordance with claim 1, 2 or 3, wherein said peripheral sensing unit comprises a peripheral image sensing unit (118) comprising a plurality of video cameras respectively mounted on the outer surface of said vehicle to pick up the images of the peripheral objects.

5. A navigation apparatus for a vehicle comprising a current-position computing unit for computing a current position of said vehicle, based on information obtained by a speed sensor (111), information obtained by a gyro sensor (111) and information provided by a global position system (110), the apparatus further comprising:
a plurality of infrared sensors (IRi) and a plurality of cameras (VCi) for sensing peripheral objects existing in the vicinity of said vehicle and outputting three-dimensional images of the sensed peripheral objects;
an alarm unit (120) for generating a sound signal informing of a hazard in response to an alarm control signal;
a display unit (115) for receiving display data and displaying the received display data on a screen;
a wheel alignment state sensing unit (119) for sensing a wheel alignment state of said vehicle; and
a system control unit (116) for calculating a position of each peripheral object, based on information obtained by the sensing results of said infrared sensors (IRi) and cameras (VCi), sending display data about the image of the sensed peripheral object along with display data about an image of the computed current vehicle position to said display unit (115), sending said alarm control signal to said alarm unit (120) when a distance between the current vehicle position and the calculated peripheral object position corresponds to a hazardous distance, and sending display data about the sensed wheel alignment state to said display unit (115) in response to a display selecting signal.

6. The navigation apparatus in accordance with claim 5, wherein said wheel alignment state sensing unit (119) comprises a plurality of cameras or angular-velocity sensors respectively mounted on said vehicle in the vicinity of wheels of said vehicle to sense the steered positions of the wheels.

7. The navigation apparatus in accordance with claim 5 or 6, wherein said alarm unit (120) comprises a speaker mounted on said vehicle in the interior of said vehicle to inform of a hazardous situation of said vehicle in response to the receipt of said alarming control signal.

8. A method for controlling a navigation apparatus for a vehicle, the apparatus including a plurality of infrared sensors - (IRi) and a plurality of cameras - (VCi) mounted on the outer surface of said vehicle, a wheel alignment state sensing unit (119) respectively mounted on said vehicle in the vicinity of the wheels of said vehicle and adapted to sense a wheel alignment state of the wheels, an alarm unit (120) for generating a sound signal informing of a hazardous situation in response to an alarm control signal, a current-position computing unit (112) for computing a current position value of said vehicle, based on information obtained by a speed sensor (111), information obtained by a gyro sensor (111) and information provided by a global position system (110), and a display unit (115) for receiving display data and displaying the received display data on a screen, the method comprising the steps of:
detecting information about positions of objects, which exist in the vicinity of said vehicle, sensed by said infrared sensors (IRi), based on the current vehicle position value computed by said current-position computing unit (112);
receiving images of the objects picked up by the cameras (VCi) and displaying images of said vehicle and objects on said display unit (115), based on the computed current vehicle position value along with a position value of each object;
sending said alarm control signal to said alarm unit (120) when a difference between the computed current vehicle position value and the object position value is equal to or less than a predetermined value; and
displaying the sensed wheel alignment state on said display unit (115) in response to an external control signal, based on an output from said wheel alignment state sensing unit (119).
